# EUROPÄISCHE PATENTANMELDUNG

(11) **EP 1 278 124 A2**
(43) Veröffentlichungstag der Anmeldung: **22.01.2003**
(21) Anmeldenummer: 02014677.5
(22) Anmeldetag: 03.07.2002
(51) Int. Cl.: G06F 11/36

(54) **Verfahren zum Betrieb eines von einem Prozessor gesteuerten Systems**

(30) Priorität: 12.07.2001 DE 10133994
(71) Anmelder: Conti Temic microelectronic GmbH, 90411 Nürnberg (DE)
(72) Erfinder: Liepold, Erich, 85092 K-sching (DE); Liesaus, Frank, 85107 Baar-Ebenhausen (DE)
(74) Vertreter: Kolb, Georg

(57) **Zusammenfassung**

2.1 Vorgeschlagen wird ein einfaches und kostengünstiges Verfahren zum Betrieb eines von einem Prozessor gesteuerten Systems, bei dem der Programmcode zur Systemsteuerung in einem maskenprogrammierbaren Festwertspeicher des Systems gespeichert wird und daß auch im Fehlerfall einen weiteren Betrieb des Systems gewährleistet.
2.2 Hierzu wird bei einem im Betrieb während der Systemsteuerung im Programmablauf auftretenden Fehler der dem Fehler entsprechende Fehlerbereich im Programmcode ermittelt. Anschließend wird ein Fehlerkorrekturprogramm erstellt, dessen Korrekturcode zusammen mit den Adressen des Fehlerbereichs im Programmcode in einen veränderbaren Speicher des Systems abgelegt werden. Bei der nächsten Inbetriebnahme des Systems wird während der Systemsteuerung im Programmablauf beim Erreichen der Startadresse des Fehlerbereichs eine Unterbrechung des Programmcodes vorgenommen und eine das Fehlerkorrekturprogramm abarbeitende Fehlerkorrekturroutine ausgeführt. Nach Beendigung der Fehlerkorrekturroutine wird ein Rücksprung zu einer auf die Endadresse des Fehlerbereichs folgende Rücksprungadresse im im maskenprogrammierbaren Festwertspeicher gespeicherten Programmcode vorgenommen.

## Beschreibung

Die Erfindung betrifft ein Verfahren zum Betrieb eines von einem Prozessor gesteuerten Systems gemäß dem Oberbegriff des Patentanspruchs 1.
Prozessorgesteuerte Systeme, bsp. durch Mikroprozessoren oder Mikrocontroller gesteuerte Systeme, werden insbesondere zur Realisierung vorgegebener Abläufe eingesetzt; der zur Systemsteuerung, insbesondere zur Ablaufsteuerung vorgesehene Programmcode ist hierbei in einer Speichereinheit des Systems implementiert, oftmals in einem nur einmal bei der Programmierung mit dem Programmcode beschreibbaren und damit nicht mehr nachträglich korrigierbaren oder änderbaren maskenprogrammierbaren Festwertspeicher (ROM). Bedingt durch Fehler im Programmcode (durch Softwarefehler) können fehlerhafte Programmabläufe auftreten und dadurch bedingt fehlerhafte Abläufe im System realisiert werden; falls dieses unerwünschte und störende Fehlverhalten erst im Betrieb des prozessorgesteuerten Systems auftritt (bsp. bei einem in einem Kraftfahrzeug eingebauten prozessorgesteuerten Steuergerät während des Betriebs des Kraftfahrzeugs) ist eine rasche und zuverlässige Fehlerbehebung von großer Bedeutung.
Hierzu muß in der Regel ein neuer Programmcode in die Speichereinheit des Systems implementiert werden, was bei einem zur Speicherung des Programmcodes verwendeten maskenprogrammierbaren Festwertspeicher (ROM) nur durch Erstellung einer neuen Speichermaske möglich ist. Nachteilig hierbei ist, daß große Fertigungslose an Maskenprozessoren unbrauchbar werden und daß mit der Erstellung einer neuen Speichermaske zum einen ein hoher Zeitaufwand verbunden ist, so daß die Behebung eines Fehlers nur durch Neuauflage von Maskenprozessoren mit einem korrigierten Programmcode erst nach einem langen Zeitraum erfolgen kann, sowie zum andern hohe Kosten anfallen, die zudem auch bei geringfügigen und eigentlich leicht korrigierbaren Fehlern entstehen.

Der Erfindung liegt die Aufgabe zugrunde, ein Verfahren zum Betrieb eines von einem Prozessor gesteuerten Systems nach dem Oberbegriff des Patentanspruchs 1 anzugeben, bei dem der korrekte Betrieb des Systems auf einfache und kostengünstige Weise gewährleistet werden kann.
Diese Aufgabe wird erfindungsgemäß durch die Merkmale im Kennzeichen des Patentanspruchs 1 gelöst.
Vorteilhafte Ausgestaltungen des Verfahrens sind Bestandteil der weiteren Patentansprüche.

Zur Gewährleistung eines korrekten Programmablaufs trotz eines im Betrieb des Systems eine Störung verursachenden Fehlers (Softwarefehlers) im im maskenprogrammierbaren Festwertspeicher (ROM) gespeicherten Programmcode, wird zunächst der fehlerhaft erkannte Programmbereich (der Fehlerbereich) im maskenprogrammierbaren Festwertspeicher (ROM) mit dem fehlerhaften Programmcode und damit die Adresse des Beginns des fehlerhaften Programmcodes im maskenprogrammierbaren Festwertspeicher (ROM) (die Startadresse) und des Endes des fehlerhaften Programmcodes im maskenprogrammierbaren Festwertspeicher (ROM) (die Endadresse) ermittelt und anschließend in einen nicht-flüchtigen (veränderbaren) Speicher des Systems (bsp. ein wiederbeschreibbarer Festwertspeicher EEPROM) zusammen mit den Adressen des Fehlerbereichs ein (kleines) Fehlerkorrekturprogramm eingebracht, das den als fehlerhaft erkannten Programmbereich (den Fehlerbereich) ersetzt. Um jederzeit einen Zugriff auf die Adressen des Fehlerbereichs und das Fehlerkorrekturprogramm sicherzustellen, können diese zyklisch vom nicht-flüchtigen Speicher des Systems (bsp. dem EEPROM) in einen flüchtigen (veränderbaren) Speicher des Systems (bsp. ein RAM) übertragen werden. Zur Umsetzung des Fehlerkorrekturprogramms werden im Programmablauf die Speicherzugriffe des Prozessors (der zentralen Prozessoreinheit CPU des Prozessors) mit der Maßgabe überwacht, daß bei einem Zugriff an einer bestimmten, frei wählbaren Adresse - in diesem Falle die im veränderbaren nicht-flüchtigen oder flüchtigen Speicher des Systems vorliegende Startadresse des Fehlerbereichs mit dem fehlerhaften Programmcode - eine Unterbrechung des Programmablaufs erzeugt wird; d.h. beim Erreichen der Startadresse des Fehlerbereichs (des fehlerhaften Programmbereichs) wird der normale Programmablauf unterbrochen und das Fehlerkorrekturprogramm in einer Fehlerkorrekturroutine ausgeführt (die Stelle im Programmcode, an der die Unterbrechung stattfinden soll, kann nach der Ermittlung des auftretenden Fehlers festgelegt werden). Nach Beendigung des Fehlerkorrekturprogramms wird zum Abschluß der Fehlerkorrekturroutine ein Rücksprung zu einer bestimmten, frei wählbaren Adresse vorgenommen - in diesem Falle zur auf die Endadresse des Fehlerbereichs (des fehlerhaften Programmbereichs) folgenden Adresse -, an der der normale Programmablauf mit dem fehlerfreien Programmcode wieder aufgenommen wird; d.h. beim Erreichen der Endadresse des Fehlerkorrekturprogramms wird wieder der normale Programmablauf ausgeführt (die Stelle im Programmcode, zu der der Rücksprung stattfinden soll, kann nach der Ermittlung des auftretenden Fehlers festgelegt werden).

Vorteilhafterweise kann mit dem vorgestellten Verfahren die korrekte Ausführung der Systemfunktion und damit der Ablaufsteuerung im Fehlerfall ohne das Erfordernis zur Erstellung einer neuen Maske für die Programmierung des maskenprogrammierbaren Festwertspeichers und damit von neuer Hardware oder zusätzlichem Entwicklungsaufwand oder Progammieraufwand auf einfache und kostengünstige Weise gewährleistet werden. Fehler im Programmcode können somit flexibel und schnell auch bei einem bereits erfolgten Betrieb des Systems (d.h. dem Einsatz des Systems beim Kunden) korrigiert werden, insbesondere da nur ein (in der Regel wenig aufwendiges und nur wenig Programmcode umfassendes) Fehlerkorrekturprogramm erstellt werden muß und nur dieses Fehlerkorrekturprogramm zusammen mit den Adressen des Fehlerbereichs in den veränderbaren Speicher des Systems eingebracht werden muß. D.h.: da Fehler im Programmablauf oftmals nur auf kleine Fehlerbereiche im Programmcode zurückzuführen sind, genügt es anstelle des sonst erforderlichen Austausches von großen Teilen der Software oder der gesamten Software ein kurzes (typischerweise mehrere Byte umfassendes) Fehlerkorrekturprogramm einzubringen. Der Eingriff in den Programmablauf und damit die Korrektur des Programmcodes durch Einbringen des Fehlerkorrekturprogramms kann zudem auf einfache Weise in einer Testeinrichtung der Fertigungslinie für den Prozessor vorgenommen werden.
Somit können fehlerhafte Bereiche im Programmcode auf einfache Weise korrigiert und deshalb auch die zur Speicherung des Programmcodes eingesetzten maskenprogrammierbaren Festwertspeicher (ROMs) weiter verwendet werden; insbesondere kann bei Kenntnis des Fehlers und des Fehlerbereichs (d.h. der Startadresse und der Endadresse des fehlerhaften Codes) dieser Fehlerbereich exakt übersprungen und statt dessen das Fehlerkorrekturprogramm ausgeführt werden, während die Programmteile vor und nach dem Fehlerbereich weiter zum Programmablauf und damit zur Ablaufsteuerung verwendet werden können.
Bei Kenntnis des Fehlers kann das Fehlerkorrekturprogramm problemlos nachträglich eingebunden werden, da der Programmablauf an jeder beliebigen Stelle unterbrochen und nach Abarbeiten des Fehlerkorrekturprogramms im veränderbaren Speicher an einer beliebigen Stelle wieder fortgesetzt werden kann; insbesondere müssen daher nicht bereits bei der Erstellung der Struktur des Programmablaufs und der Programmierung des Programmcodes Korrekturmöglichkeiten berücksichtigt werden und Fehlerroutinen auf ihre Verträglichkeit mit dem Programmablauf hin überprüft werden.

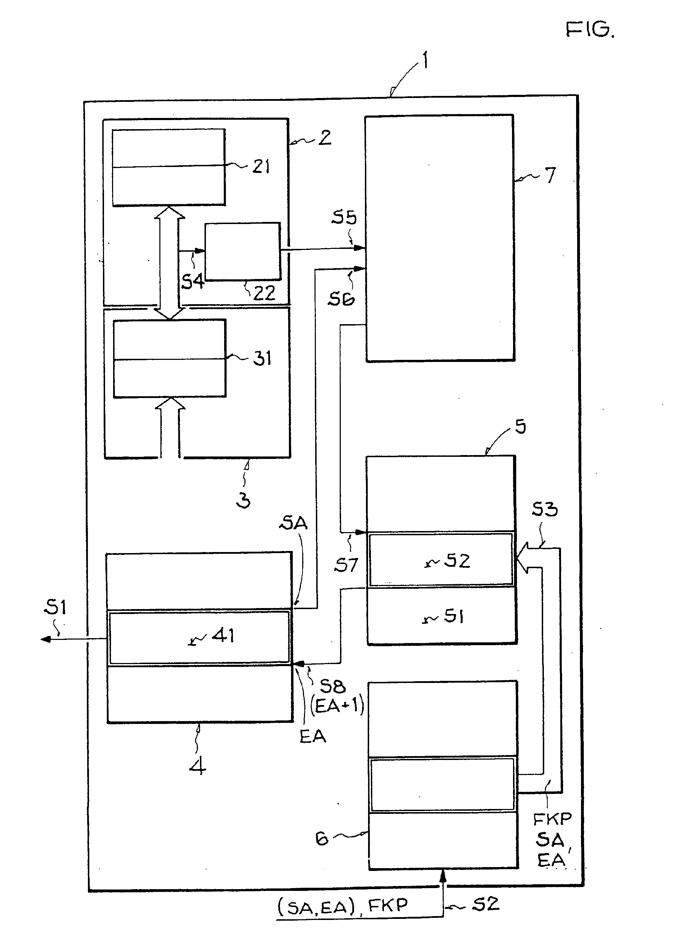

Im Zusammenhang mit der Zeichnung soll das Verfahren weiter erläutert werden. Hierbei zeigt die Figur in einem Ausführungsbeispiel die Komponenten eines als Mikrocontrollers ausgebildeten Prozessors sowie einige der zur Realisierung des Verfahrens benötigten Verfahrensschritte.

Der zur Steuerung einer Bedienfunktion eines Kraftfahrzeugs vorgesehene Mikrocontroller 1 ist als Einprozessorsystem bsp. in einem als Steuergerät zur Steuerung der Fensterheber des Kraftfahrzeugs ausgebildeten System implementiert. Der in einem integrierten Schaltkreis integrierte Mikrocontroller 1 weist gemäß der Figur als Funktionseinheiten bsp. zumindest eine zentrale Prozessoreinheit CPU 3, einen maskenprogrammierbaren Festwertspeicher ROM 4 zur Speicherung des Programmcodes des Programmablaufs, einen veränderbaren flüchtigen Speicher RAM 5, einen veränderbaren wiederbeschreibbaren nicht-flüchtigen Festwertspeicher EEPROM 6 und eine Fehlerkorrektureinheit 2 zur Deaktivierung und Reaktivierung des Programmablaufs (zur Unterbrechung des Programmablaufs bei einer beliebigen Programmadresse zu einer beliebigen Zeit) auf.

Bei im Betrieb des Systems Fensterheber während der Ablaufsteuerung auftretenden, durch Fehler im Programmcode (Softwarefehler) bedingten Störungen wird mit Hilfe der Fehlerkorrektureinheit 2 der Programmablauf exakt an der Startadresse SA zu Beginn des Fehlerbereichs 41, d.h. am Anfang des im maskenprogrammierbaren Festwertspeicher ROM 4 gespeicherten fehlerhaften Programmcodes unterbrochen und eine Fehlerkorrekturroutine durchgeführt, in der der Fehler mit Hilfe eines Fehlerkorrekturprogramms korrigiert wird.
- Schritt S1: Zunächst werden die Adressen, an denen der Softwarefehler beginnt und endet, d.h. die Startadresse SA und die Endadresse EA des Fehlerbereichs 41 aus der Software des Programmcodes bzw. aus deren Hexcode ermittelt (bsp. durch Analyse mit einem Emulator).
- Schritt S2: Ist der Softwarefehler bekannt und sind die Adressen des Beginns des Fehlerbereichs 41 (die Startadresse SA) und des Endes des Fehlerbereichs 41 (die Endadresse EA) ermittelt, werden Startadresse SA und Endadresse EA sowie als Korrekturcode der Code des Fehlerkorrekturprogramms FKP in den wiederbeschreibbaren Festwertspeicher EEPROM 6 geschrieben; der Korrekturcode kann bsp. via Diagnosebefehle am Endtester der für die Produktion des Mikrocontrollers 1 eingesetzten Fertigungslinie in den wiederbeschreibbaren Festwertspeicher EEPROM 6 geschrieben werden.
- Schritt S3: Bei jedem Rücksetzen des Systems (Reset) und zyklisch im Programmablauf der Ablaufsteuerung wird eine Abfrage nach einem gültigen Fehlerkorrekturprogramm FKP im wiederbeschreibbaren Festwertspeicher EEPROM 6 und dessen Programmcode (Korrekturcode) durchgeführt. Ist ein gültiger Korrekturcode im wiederbeschreibbaren Festwertspeicher EEPROM 6 hinterlegt, wird dieser zur Gewährleistung eines Zugriffs in jeder Phase der Ablaufsteuerung im Betrieb des Systems Fensterheber vom wiederbeschreibbaren Festwertspeicher EEPROM 6 in einen freien Bereich 52 des flüchtigen Speichers RAM 5 kopiert und danach die Startadresse SA des Fehlerbereichs 41 in ein Adreßregister 21 geschrieben und eine einen Adreßkomparator 22 enthaltende Fehlerkorrektureinheit 2 aktiviert; um Bitfehlern im flüchtigen Speicher RAM 5 bsp. durch Alterung oder EMV-Einflüsse vorzubeugen, wird der Korrekturcode des Fehlerkorrekturprogramms FKP während des Programmablaufs zyklisch vom wiederbeschreibbaren Festwertspeicher EEPROM 6 in den flüchtigen Speicher RAM 5 geschrieben.
- Schritt S4: Vor der Aktivierung der Fehlerkorrektureinheit 2 wird die Startadresse SA des Fehlerbereichs 41 aus dem wiederbeschreibbaren Festwertspeicher EEPROM 6 in das Adreßregister 21 der Fehlerkorrektureinheit 2 kopiert; durch den Adreßkomparator 22 der Fehlerkorrektureinheit 2 wird dieses Adreßregister 21 kontinuierlich mit dem Adreßbus 31 der zentralen Prozessoreinheit CPU 3 des Prozessors 1 verglichen.
- Schritt S5: Stimmen die Adressen des Adreßregisters 21 der Fehlerkorrektureinheit 2 (diese entspricht der Startadresse SA des Fehlerbereichs 41) und die Adresse auf dem Adreßbus 31 der zentralen Prozessoreinheit CPU 3 des Prozessors 1 (diese entspricht der nächsten Adresse des Programmcodes im Programmablauf) überein, wird ein nicht-maskierbarer Interrupt generiert.
- Schritt S6: Durch diesen nicht-maskierbaren Interrupt wird eine Unterbrechung des im maskenprogrammierbaren Festwertspeicher ROM 4 festgelegten Programmablaufs erzwungen und eine Fehlerkorrekturroutine 7 durchgeführt (der nicht-maskierbare Interrupt ist ein Interrupt, der nicht unterbunden oder unterbrochen werden kann; ein solcher Interrupt wird immer ausgeführt und unterbricht somit immer jeden normalen Programmablauf oder alle anderen Interruptserviceroutinen).
- Schritt S7: In der Fehlerkorrekturroutine 7 wird in den flüchtigen Speicher RAM 5 gesprungen und hierdurch der Programmcode des vorher vom wiederbeschreibbaren Festwertspeicher EEPROM 6 in den flüchtigen Speicher RAM 5 kopierten Fehlerkorrekturprogramms FKP (der Korrekturcode) anstelle des im maskenprogrammierbaren Festwertspeicher ROM 4 stehenden fehlerhaften Programmcodes ausgeführt. Zu Beginn der Fehlerkorrekturroutine 7 wird die Rücksprungadresse automatisch auf dem Stack 51 des flüchtigen Speichers RAM 5 abgelegt; diese eigentlich als Adresse des Aussprungs aus dem Programmcode und damit als Startadresse SA des Fehlerbereichs 41 festgelegte Rücksprungadresse wird vor der Ausführung des Fehlerkorrekturprogramms FKP und damit des Korrekturcodes im flüchtigen Speicher RAM 5 in die auf die Endadresse EA des Fehlerbereichs 41 folgende Adresse EA + 1 des Programmcodes geändert.
- Schritt S8: Nach Beendigung des Fehlerkorrekturprogramms FKP und damit des Korrekturcodes wird durch diese Änderung der Rücksprungadresse zur auf das Ende des Fehlerbereichs 41 folgenden Adresse (EA + 1) zurückgesprungen und dadurch der bei der auf die Endadresse EA folgenden Adresse (EA + 1) beginnende erste Programmschritt am Anfang des Programmbereichs mit fehlerfreiem Programmcode im maskenprogrammierbaren Festwertspeicher ROM 4 ausgeführt.
Zur Verifizierung des Zustands des wiederbeschreibbaren Festwertspeichers EEPROM 6 und damit des im wiederbeschreibbaren Festwertspeicher EEPROM 6 gespeicherten Korrekturcodes des Fehlerkorrekturprogramms FKP, wird vor jedem Lesevorgang des Inhalts des wiederbeschreibbaren Festwertspeichers EEPROM 6 dessen Gültigkeit durch Lesen eines Kennungscodes abgefragt. Wenn vor einem Kopiervorgang des Korrekturcodes des Fehlerkorrekturprogramms FKP vom wiederbeschreibbaren Festwertspeicher EEPROM 6 in den flüchtigen Speicher RAM 5 festgestellt wurde, daß der wiederbeschreibbare Festwertspeicher EEPROM 6 nicht mehr gültig ist, wird die Fehlerkorrektureinheit 2 deaktiviert. Dies hat zur Folge, daß bei einem Fehler im Programmablauf kein Fehlerkorrektur-Interrupt mehr generiert werden kann und damit anstelle des Fehlerkorrekturprogramms FKP weiterhin der aufgrund des fehlerhaften Programmcodes im maskenprogrammierbaren Festwertspeicher ROM 4 entstehende fehlerhafte Programmablauf ausgeführt wird; hierdurch bleibt das Steuergerät eingeschränkt funktionsfähig und es kann mit dem Steuergerät weiterhin kommuniziert werden, während ansonsten im Falle eines nicht ordnungsgemäßen wiederbeschreibbaren Festwertspeichers EEPROM 6 bei Fehlern in zyklisch aufgerufenen Funktionen zyklische Resets durchgeführt würden.

## Patentansprüche

1. Verfahren zum Betrieb eines von einem Prozessor (1) gesteuerten Systems, bei dem der Programmcode zur Systemsteuerung in einem maskenprogrammierbaren Festwertspeicher (4) des Systems gespeichert wird,
**dadurch gekennzeichnet,**
**daß** bei einem im Betrieb während der Systemsteuerung im Programmablauf auftretenden Fehler der dem Fehler entsprechende Fehlerbereich (41) im Programmcode ermittelt wird,
**daß** ein Fehlerkorrekturprogramm (FKP) erstellt wird und der Korrekturcode des Fehlerkorrekturprogramms (FKP) zusammen mit den Adressen des Fehlerbereichs (41) im Programmcode in einen veränderbaren Speicher (6) des Systems abgelegt werden,
**daß** bei der nächsten Inbetriebnahme des Systems während der Systemsteuerung im Programmablauf beim Erreichen der Startadresse (SA) des Fehlerbereichs (41) eine Unterbrechung des Programmcodes vorgenommen und eine das Fehlerkorrekturprogramm (FKP) abarbeitende Fehlerkorrekturroutine (7) ausgeführt wird,
und **daß** nach Beendigung der Fehlerkorrekturroutine (7) ein Rücksprung zu einer auf die Endadresse (EA) des Fehlerbereichs (41) folgenden Rücksprungadresse (EA + 1) im im maskenprogrammierbaren Festwertspeicher (4) gespeicherten Programmcode vorgenommen wird.

2. Verfahren nach Anspruch 1, **dadurch gekennzeichnet, daß** die Unterbrechung des Programmcodes durch einen nicht-maskierbaren Interrupt vorgenommen wird.

3. Verfahren nach Anspruch 2, **dadurch gekennzeichnet, daß** während der Systemsteuerung die Adresse des Programmcodes im Programmablauf mit der veränderbaren Speicher (6) abgelegten Startadresse (SA) des Fehlerbereichs (41) verglichen wird, und daß bei einer Übereinstimmung dieser beiden Adressen der nicht-maskierbare Interrupt ausgeführt wird.

4. Verfahren nach einem der Ansprüche 1 bis 3, **dadurch gekennzeichnet, daß** der Korrekturcode des Fehlerkorrekturprogramms (FKP) und die Adressen des Fehlerbereichs (41) in einen wiederbeschreibbaren Festwertspeicher (6) abgelegt werden.

5. Verfahren nach Anspruch 4, **dadurch gekennzeichnet, daß** der Korrekturcode des Fehlerkorrekturprogramms (FKP) und die Adressen des Fehlerbereichs (41) vom wiederbeschreibbaren Festwertspeicher (6) in einen veränderbaren flüchtigen Speicher (5) kopiert und dort abgelegt werden.

6. Verfahren nach Anspruch 4 oder 5, **dadurch gekennzeichnet, daß** der Korrekturcode des Fehlerkorrekturprogramms (FKP) und die Adressen des Fehlerbereichs (41) bei jedem Rücksetzen des Systems und zyklisch während des Programmablaufs vom wiederbeschreibbaren Festwertspeicher (6) in den veränderbaren flüchtigen Speicher (5) kopiert werden.

7. Verfahren nach einem der Ansprüche 1 bis 6, **dadurch gekennzeichnet, daß** die Rücksprungadresse vor dem Ausführen der Fehlerkorrekturroutine (7) als die auf die Endadresse (EA) des Fehlerbereichs (41) folgende Adresse (EA +1) im Programmcode festgelegt wird.

8. Verfahren nach einem der Ansprüche 1 bis 7, **dadurch gekennzeichnet, daß** der maskenprogrammierbare Festwertspeicher (4) im Prozessor (1) integriert wird.

9. Verfahren nach einem der Ansprüche 1 bis 8, **dadurch gekennzeichnet, daß** der veränderbare flüchtige Speicher (5) im Prozessor (1) integriert wird.

10. Verfahren nach einem der Ansprüche 1 bis 9, **dadurch gekennzeichnet, daß** der wiederbeschreibbare Festwertspeicher (6) im Prozessor (1) integriert wird.
